# EUROPEAN PATENT SPECIFICATION

(11) **EP 2 220 414 B1**
(45) Date of publication and mention of the grant of the patent: **02.10.2013**
(21) Application number: 08862349.1
(22) Date of filing: 16.12.2008
(51) Int. Cl.: F16L 1/028

(54) **METHOD FOR THE CONSTRUCTION OF A LONG PIPELINE**
VERFAHREN ZUR KONSTRUKTION EINER LANGEN RÖHRENLEITUNG
PROCEDE POUR LA CONSTRUCTION D'UN LONG PIPELINE

(30) Priority: 18.12.2007 EP 07123514
(43) Date of publication of application: 25.08.2010
(73) Proprietor: Shell Internationale Research Maatschappij B.V., 2596 HR The Hague (NL)
(72) Inventor: FREETH, Graham Dudley, NL-2288 GS Rijswijk (NL); SMITH, Richard James Anthony, NL-2288 GS Rijswijk (NL)
(86) International application number: PCT/EP2008/067580
(87) International publication number: WO 2009/077514

(56) References cited:
- WO-A-2006/016190
- US-A- 5 662 432

## Description

The present invention concerns a method for the construction of a long pipeline using a mobile pipeline producing unit, the unit especially comprising a multitude of detachably connected containers, by putting up the mobile unit, producing two specific lengths of pipeline in opposite directions along the stretch of the projected pipeline, moving the unit, again producing two specific lengths and repeating this process if necessary and connecting all produced specific lengths.

In general, it is advantageous to try to minimize the weight of pipelines (per unit length), while at the same time maintaining the specifications of the maximum allowable pressure at which the pipeline can be operated. Or, expressed in a different way, it is advantageous to increase the maximum allowable pressure at which the pipeline can be operated, while the weight (per unit length) remains the same.

It is known that natural gas and liquid petroleum products may contain undesired contaminants, especially undesired acidic contaminants as carbon dioxide and hydrogen sulphide. Further, organic acids as well as chlorides may be present. It is also known that under standard operating conditions of pressure and temperature, pipelines formed of conventional materials carrying such contaminated products may be subject to failure, for instance due to stress corrosion cracking. Such failures may result in longitudinally extending fractures of the pipelines.

Previous attempts to reduce the risk of such failures have involved the use of corrosion inhibitors, added to the products being carried by the pipelines. Unfortunately, this may result in unacceptable costs including not only the cost of the inhibitors and adding them to the products but also the cost of removing and recovering the corrosion inhibitors in due course from the products carried by the pipelines. The use of corrosion inhibitors is also not advisable, particularly in offshore pipelines, due to potential environmental problems created if there is an escape of the corrosion inhibitors from the pipelines.

Alternative ways of reducing the risk of cracking, especially stress corrosion cracking, in pipes by reducing the tensile stress on the part of the pipes in contact with the contaminated products being carried have been proposed. These include the use of pipes formed of, for example, two tubes inserted one inside the other and to then during production mechanically forcing the inner pipe into contact with the outer pipe so that the inner pipe after completion of this operation has a compressive stress and the outer pipe has a tensile stress. This process is known as "auto-frettage" and one way of carrying out this operation mechanically is described in U.S. Patent No. 4,823,847.

Elongated tubular bodies of a different kind are known from US Patent No. 4,657,049 in which metal strips are helically wound in overlapping fashion and embedded in an adhesive matrix to produce a rigid tubular structure. US Patent No. 3,530,567 describes a method of forming an elongated tubular body (or pipe or pipeline) by helically winding a metal strip in self-overlapping fashion so that the thickness of the wall of the tube at any point is formed from a plurality of laps. In order to remove the helical ridges on the internal bore of the tube formed by the edges of the strip, the laps of the strip material are flattened one against the other after winding by expanding the tubular structure beyond the yield point of the metal strips.

In GB 2280889 a method is disclosed to form a hollow elongated or tubular body which comprises helically winding at least one strip of material in self-overlapping fashion to provide a multi-layer tubular structure. In this arrangement the strip is longitudinally pre-formed to provide a transverse cross-section having at least one step which, in each convolution of the strip accommodates the overlapping portion of the next convolution. A similar tubular body is described in WO 2006/016190.

An advantageous way to construct elongated tubular bodies comprises two or more layers of relatively simple preformed metal strips (together forming the outer casing) around a relatively light inner pipe (the inner casing). The layers in the outer casing are glued together, and preferably the outer casing is glued onto the inner casing. The preformed metal strip is a simple flat, prebended strip without any profile. The pre-bending is done under a slight angle with the longitudinal direction of the strip. Thus, the pre-bending results in a helical shape. The preformed metal strips in the finished tubular body are not self overlapping. The inner casing is preferably corrosion resistant. In this way the requirements of the pipeline (corrosion resistance and strength) are, at least partly, separated. The inner casing provides especially the corrosion resistance, the outer layers provide the major part of the strength (axial as well as radial). The hollow core in the centre of the elongated body is the space for the transport of gas and/or liquids. The elongated tubular body and its manufacturing process have been described in EP 07106221.0.

Using the continuous construction process as described in any of the above described processes, it is possible to construct pipelines of considerable length, i.e. several kilometres. It may be a problem to transport these long pipelines from the construction workshop to places where the pipelines are to be used. Thus, it would be an advantage to be able to construct the pipelines at those places were the pipe is to be used using mobile equipment.

A number of methods are known to construct pipelines outside a workshop using mobile equipment. In US 3744259 a pipe constructing unit is described that moves above the trench in which the pipe is to be laid. Similar moving units are known from US 3900146, US 4651914, US 4130925, US 4907732 and US 4452550.

A disadvantage of the above known methods is the use of a large and heavy unit for the manufacture of the long pipes. The unit needs to be moved over the ground while producing the pipe, often in a difficult area. It has been described in the recently filed European application No. 07116327.3 that a stationary mobile unit, that can be transported from one production site to another, can be used for the continuous production of moving (long) pipes. In that way the (long) pipe is transported continuously for instance via guiding rollers or over a sliding guide over a large distance. Once a suitable length has been obtained, the pipe construction process is stopped, and the mobile unit is transported to a second location, at the opposite end of the first pipe. At the second location a second pipe can be produced, which pipe is then connected to the first one.

It is observed that in principle any distance can be made by a continuous process. In practice however, it appears that lengths (or sections) between for instance 1 and 10 or 15 kilometres is a practical length to be made, as the continuous transportation of the growing pipeline becomes more difficult the longer the pipeline is. In addition, it appears that such sections often correspond with the length of pipeline sections needed. In this respect it is observed that a long pipeline is often made from smaller sections due to river crossing, road crossings, compressing stations, expansion loops, connections, branches etc. These sections are connected with each other by means of connectors, or they are directly coupled to the compressors etc. The production of several kilometres, e.g. 3 to 6 kilometres, can suitably be done in for instance one day. The practical length to be made in such a day depends for instance on the accessibility and the slope of the stretch. A stretch going downhill by a few degrees allows a considerable longer production than a similar stretch, but going uphill by a few percent.

A disadvantage of the above method is that each time after the production of one specific length the mobile unit needs to be dissembled, transported over a long distance and assembled again for the production of another specific length. It would be advantageous to be able to produce more specific lengths in a more efficient way.

It has now been found that a more efficient production of long pipelines is possible by producing two specific length of pipe in opposite directions from one point. This may be obtained by turning the mobile unit from one direction to the opposite direction, or, preferably, by producing the specific length from the same production place, in which process the mobile unit suitably has a production direction which is more or less perpendicular to the pipeline direction unit and bending the two produced pipes into opposite directions along the stretch of the projected pipeline.

Thus, the present invention concerns a method for the construction of a long pipeline using a mobile pipeline producing unit, the mobile unit being able to produce specific lengths of the pipeline, each specific length being a fraction of the length of the long pipeline, the method comprising placing the mobile unit at a first position at the stretch of the projected long pipeline, producing a specific length of pipeline in one direction of the projected long pipeline, producing a second specific length of pipeline in the opposite direction, moving the mobile production unit to a second position at the stretch of the projected long pipeline, producing a third specific length of pipeline in a direction of the long pipeline, producing a fourth specific length of pipeline in the opposite direction, optionally moving the mobile production unit to a further Position at the stretch of the projected long pipeline, producing a further specific length of pipeline in a direction of the projected long pipeline, producing another further specific length of pipeline in the opposite direction and optionally repeating this process one or more further times, and connecting all produced specific lengths.

By using the method as described above, a more efficient pipeline production process is obtained. Rather than moving the mobile unit after the production of one specific pipeline length, the mobile unit produces two specific pipeline lengths before it is moved to another production place. This results in a more efficient way to produce a long pipeline.

In this specification the term "long pipeline" stands for the total length of the pipeline that is needed for the transport for liquid and/or gas. The term "specific length" stands for a part or fraction of the total length. Each length produced by the mobile unit is a specific length. The specific length is often the practical length as described herein before.

The present method especially concerns a method in which two or more mobile pipeline producing units are used, preferably two or three, the second and, if present, further mobile units operating in the same way as the first mobile unit.

A further improvement is obtained by using a further mobile pipeline producing unit, the further unit being maintained, transported or in standby position. It is especially preferred to use three mobile pipeline producing units, one unit constructing pipeline, one unit being maintained and one unit being transported to a new location. In that way an optimum efficiency is obtained, also in relation to the equipment to use for the transportation of the mobile unit. For instance, in the case that only one mobile unit is used, this usually will imply two days of production, optionally a day for maintenance, followed by transportation. This would mean every four days the presence of e.g. a helicopter, including crew, for transport. By using the three mobile units as described above, the helicopter is continuously used each day, rather than one day in four days. A similar preferred embodiment is the use of two mobile units, one producing pipeline, the other being maintained and transported simultaneously.

In a preferred embodiment a mobile unit is used comprising a multitude of detachably connected containers. The mobile unit is preferably assembled at the first position from the individual containers. The mobile unit comprises a multitude of containers, each container having a size and weight making it relatively easy to be transported. In addition, provisions may be present, e.g. openings, rings, hooks, cask-grips, for quick and easy lifting or hoisting and transporting. Each container comprises a part of the equipment necessary for the continuous production of elongated pipes. By using detachable containers for the mobile unit, the unit can be taken apart into the smaller containers, and the containers can be transported over a (long) distance. This can be done, for instance, by using a helicopter, a boat or a truck, or combinations thereof. By repeating the process a very long pipeline can be constructed. There is no need to transport heavy machines over long distances over the ground. Further, all the required materials for the construction of the pipeline can be delivered at a limited number of places.

The method suitably comprises dissembling the mobile unit into individual containers before moving the unit, moving the dissembled parts of the mobile unit to the second or further position and re-assembling the mobile unit before the further production of one or more specific lengths. In the case of a very small unit it may be possible to move the mobile unit without dissembling. It is observed that in the case of two adjacent containers, it could be possible to transport these two containers in one go, especially when it concerns relatively small containers.

In the present method the first position is suitably a specific length away from one end of the projected long pipeline. By producing one specific length to the start or the end of the projected pipeline followed by the production of another specific length in the other direction, an optimum efficiency is obtained. To maintain the optimum efficiency, the second position is suitably two specific lengths away from the first position. In the same way, any further position is two specific lengths away from a previous position. It is observed that it is not necessary to construct the total pipeline by continuously constructing adjacent pipelines from the start to the end. It is also possible to construct the pipeline from two sides, or to construct first one or more centrally located parts, followed by connecting parts. In fact, the pipeline may be divided into suitable specific length in the design, where after the specific lengths may be constructed in a random order, preferably producing as many double specific lengths as possible. It is observed that sometimes only one specific length need to be produced from a specific position, e.g. when the distance between two specific ends produced according to the method of the present invention is such that only one additional specific length is required to connect the ends.

Suitably the mobile unit produces a specific length in one direction of the stretch of the projected pipeline, followed by turning around the mobile unit and producing a specific length of the pipeline in the opposite direction. In another embodiment the mobile unit produces at the same place two specific length of pipeline, one specific length being bend into one direction of the stretch of the projected pipeline, the other specific length being bend into the other direction of the stretch of the projected pipeline. Preferably, the mobile unit has a production direction perpendicular to the stretch of the projected pipeline, preferably the mobile unit situated at a certain distance from the stretch of the projected pipeline, especially a distance between 5 and 500 meters, preferably between 20 and 200 meters, more preferably between 40 and 80 meters. The angle between the mobile unit production direction and the projected pipeline is suitable between 30 and 120°, preferably between 60 and 120°, more preferably about 90°. It is, however, also possible that the mobile unit first is placed in one direction of the projected pipeline and produces into this direction, followed by a second specific length in the same direction, which length is than bend 180° into the opposite direction.

In another embodiment of the invention, a specific length may be produced in one direction of the projected long pipeline, followed by transport into the opposite direction for the length of the specific length. It is observed that the transport of the specific lengths usually will require transportation means. These transportation means will often be present in both directions of the projected pipeline. Thus, in the case that it is easier to produce into a specific directions than in the other direction, it might be advantageous to produce a specific lengths into one direction and have this one transported into the other direction using the transportation means for the two specific lengths, followed by the manufacture of the second specific length. In this embodiment the term "producing a specific length of pipeline in one direction of the projected pipeline" is to be read as "producing a specific length of pipeline in one direction of the projected pipeline by producing the specific length in the opposite direction, followed by transport in the other direction until it is at the originally planned position".

By using the method described above, long pipelines may be produced having a length of at least 20 km, preferably at least 50 km, more preferably at least 100 km, even more preferably at least 200 km, the length of the pipeline being up till 500 km, or even up till 1000 km or even more.

Suitably, in the method as described above specific lengths are produced having a length of 0.5 to 10 km, preferably 1 to 7.5 km, more preferably 2 to 6 km, each specific length having the same length or having a different length as any other specific length. The actual specific length will depend on the situation in which the pipeline is to be produced. For instance uphill stretches usually will require shorter specific length than downhill stretches, and the presence of rivers, mountains, geological faults etc. may result in specific lengths that are shorter than specific lengths in optimum terrain conditions.

Suitably, in the present method the ratio of the length of the long pipeline and the specific length is >5, preferably >10, more preferably >25, the ratio being up till 400, or even up till 1000 or even more.

In the method according to the present invention the produced specific length is suitably transported above the ground level. The produced pipeline may be transported using equipment known in the art, e.g. rolling guide bars. When possible, the produced specific length may be directed into a pre-dug trench and transported through the trench. In that way there is no need later on to transfer the pipeline into the trench.

To obtain the desired long pipeline, all specific lengths are connected to each other by methods known in the art. The connections may be made after the construction of all specific lengths, however, the connections may also be made once the possibility is there to connect them.

The mobile unit to be used in the present invention is suitably a mobile unit for the construction of an elongated tubular body, the tubular body comprising an elongated, tubular inner hollow core, an elongated, tubular inner casing and an elongated, tubular outer casing, the inner casing surrounding the hollow core, the outer casing surrounding the inner casing, the outer casing comprising one or more layers, each layer consisting of one or more helically wound metal strips, the inner casing and the outer casing as well as any layers in the outer casing being bound to each other by an adhesive, which elongated body is to be made by a process comprising constructing the elongated inner casing, providing one or more metal strips, winding the one or more metal strips helically around the inner casing, providing adhesive or a curable adhesive precursor and applying it between the casings and the layers, followed by curing the adhesive precursor when present, the mobile unit comprising a multitude of detachably connected containers, each container comprising equipment to carry out one or more of the process steps as described above with the proviso that when two or more layers are present or when overlapping layers are present there may or may not be an adhesive layer between the inner and the outer casing.

The mobile unit especially comprises at least one container in which equipment is present for the construction of the elongated inner casing. The construction of the elongated inner casing is known from the prior art. A suitable way to construct the inner casing is in a continuous way from flat metal sheets by rolling a metal sheet into a tube, preferably cold rolling, followed by longitudinally welding the rolled sheet, especially laser welding, and connecting the welded tubes to each other, preferably by welding, especially laser welding. Preferably the rolling process is done in two steps, each step converting half of the sheet into half of the tube, preferably using a three rollers assembly to bend the sheet.

In another embodiment the inner casing is made in a continuous way from flat metal sheets by pressing, preferably in a two stage pressing process, followed by longitudinally welding the rolled sheet, especially laser welding, and connecting the welded tubes to each other, preferably by welding, especially laser welding.

Another embodiment comprises the continuous manufacture of the inner casing by helically winding a flat metal strip and welding the winded strip.

In still another embodiment a long rolled metal strip is unrolled and simultaneously folded in the longitudinal direction into a tube, followed by welding the two sides to each other.

In still a further embodiment the inner casing is made in a continuous way by extrusion of a polymer, preferably an organic polymer.

The mobile unit especially comprises at least one container in which equipment is present for winding the one or more metal strips around the inner casing. The construction of the outer casing is known in the prior art, for instance in the patent documents cited hereinbefore. A very suitable method is described in the earlier filed European application EP 07106221.0. The process described in that document comprises the manufacture of an elongated, multilayered tubular body as described above, the outer casing comprising at least two layers, each layer consisting of one or more longitudinally preformed, flat elongated metal strips, the preforming of the strips such that the strips have been bent helically in such a way that the consecutive windings of the helix or helices touch or almost touch to each other, each strip in one layer overlapping with other strips in other layers, the layers in the outer casing being bound to each other by an adhesive, the process comprising providing an elongated inner casing, providing one or more first flat elongated metal strips, plastically preforming the one or more first metal strips in a bending process to obtain one or more helices and applying the one or more preformed first metal strips onto the inner casing to form the first layer of the outer casing, providing and applying adhesive or curable adhesive precursor, providing one or more second flat, elongated metal strips, plastically preforming the one or more second metal strips in a bending process to obtain one or more helices and applying the preformed one or more second metal strips on the first layer of the outer casing to form the second layer of the outer casing, optionally followed by the further provision and application of one or more additional layers of adhesive and preformed flat, elongated metal strips. Preferably the inner casing and the outer casing are connected to each other by adhesive.

By virtue of the feature that flat metal strips are used to prepare the preformed helix shaped outer casing layers, hardly any failures will be present in the preformed strip, for instance due to stress concentration. Especially when using high strength steel alloy, e.g. with a high proportion of its crystal grains in the martensitic phase, tubular bodies are obtained which can withstand high pressures. The use of especially corrosion resistant inner casings will reduce any stress corrosion. By using overlapping layers of preformed strips in the outer casing a substantial portion of the axial load may be taken up by the outer casing. The tubular bodies of the present invention may withstand the same internal pressure, while a material weight saving of 40% or more is obtained when compared with standard pipe. Especially the combination of high martensitic phase content steel strips and pre-bending is advantageous as without pre-bending the finished pipe product will contain a large amount of elastic deformation energy, which makes the production process as well as any repairs a difficult procedure.

The pre-bending of the strip involves applying suitable forces to obtain a helix shaped strip by plastic deformation of the metal. In the case that a layer is formed by one metal strip, the diameter of the helix (without any forces causing elastic deformation) is of the same order of magnitude as the inner casing, while the consecutive windings of the helix just touch to each other or show a small gap or overlap that can be overcome by elastic deformation of the metal only, to obtain a small gap as defined below. The diameter of the helix may be between 0.6 and 1.4 times the diameter of the inner casing, suitably, the diameter of the helix is between 0.8 and 1.25 times the diameter of the inner casing, preferably between 0.9 and 1.12, more preferably between 0.97 and 1.04.

In principle there are no restrictions as to the diameter of the tubular body. Suitably the inner hollow core has a diameter of between 5 and 250 cm, preferably between 10 and 150 cm, more preferably between 15 and 125 cm. The outer casing will comprise at least two layers. When using only one layer, the axial load resistance would be too low. In principle, there is no limit to the maximum number of layers, but a practical number will be up till 24, especially up till 20. Suitably the outer casing comprises between 2 and 16 layers, preferably between 2 and 10 layers, more preferably between 3 and 8 layers, especially 4-6 layers. It will be appreciated that more layers will result in pipes that can withstand higher pressures. Also a higher axial strength is obtained.

The elongated tubular body, when comprising one strip in each layer, suitably has a ratio circumference/ strip width between 3 and 40, preferably 4 and 28, more preferably between 6 and 20, the circumference being the circumference of the smallest layer (or the first layer around the hollow core) of the outer casing. In the case of more than one strip in a layer, the strip width is defined as the sum of the strip widths in that layer.

The distance between two windings in one layer in the outer casing is preferably relatively small. In that way the forces can be transferred relatively easy without any potential problems with respect to cracking of adhesive layers. Suitably, the axial gap, if present, between two consecutive helix windings is at most a quarter of the strip width, preferably at most a sixth of the strip width, more preferably at most a tenth of the strip width. Sufficient overlap between the layers is thus obtained to transfer the forces. Suitably the gap between two windings of the strip is at most 1 cm, preferably at most 0.4 cm, more preferably at most 0.1 cm.

The distance between the inner casing and the first layer in the outer casing is suitably at most 2 mm, preferably between 0.01 and 1 mm. In a similar way, the distance between two layers in the outer casing is at most 2 mm, preferably between 0.01 and 1 mm. Normally the gap between the inner casing and the first layer and between the layers in the outer casing will be filled with adhesive. In a preferred embodiment, in which the tubular body is treated by an auto-frettage technique, most empty spaces, preferably all empty spaces, between the inner casing and the layers, will be removed. In the case of one metal strip in a layer, each strip in a layer overlaps another strip in another layer in a longitudinal section for 10 till 90%, preferably for 25 till 75%, more preferably for 40 till 60%.

The outer casing of the elongated tubular body is suitably made of steel, stainless steel, titanium or aluminium, preferably a high strength steel as further defined above, especially steels with a high proportion of its material in the martensitic phase. Steel with a high amount of martensitic crystal grains is preferred in view of its high strength. The use of such steels results in tubular structures of relatively high strength and low weight. These steels have tensile strengths between 900 MPa and 1500 MPa. These steels may be obtained from Mittal Steel under the trade name "MartINsite".

The elongated tubular body as described above is suitably made of a metal strip having a Specified Minimum Yield Stress (SMYS) of at least 100,000 lbs/square inch, preferably between 150,000 and 300,000 lbs/square inch, more preferably between 180,000 and 250,000 lbs/square inch.

The inner casing is suitably a metal pipe, especially a steel pipe, more especially a corrosion resistant steel pipe as a stainless steel pipe. The inner casing may also have been made from an organic polymer as PE, PP, PU, PVC etc.

In a further embodiment the mobile unit comprises at least one container comprising equipment for the curing of curable adhesive precursor. In general, the elongated tubular body as discussed above suitably comprises an adhesive layer comprising a strip of adhesive applied to the inner casing and/or between the layers in the outer casing. In principle every adhesive may be used (liquid, powder etc.), but from a practical point of view a strip is preferred. Preferably, the adhesive layer comprises a curable polymer, preferably a film based epoxy having a textile carrier, more preferably Cytec FM 8210-1. The equipment for curing suitably comprises heating equipment, for instance infrared lights, to heat the elongated tube to temperatures around 160-220 °C. In addition to the container comprising the curing equipment, there may be a container to cool the temperature of the elongated body down to a lower temperature, e.g. by 60 to 120 °C, to a temperature between 100 and 40 °C. This cooling may be provided by e.g. air or cooled air.

In another embodiment the mobile unit comprises at least one container comprising equipment for the continuous movement of the tubular body or its intermediate parts. In general, equipment to move pipelines is well known in the art. It suitably comprises equipment comprising two tracks opposite to each other and touching to the pipe, the two tracks moving the pipe forward. Such equipment is provided by Caterpillar.

The mobile unit comprises suitably a container provided with equipment to apply a protective coating onto the elongated tubular body. The coating protects e.g. weather conditions, movements over the ground and external damages. It is a preferred option to protect the elongated tubular body as discussed above by one or more protective layers on the outside of the outer casing. Suitable coatings are polymer coatings, for example PE (polyethylene), PP (polypropylene), PU (polyurethane) and/or PVC (polyvinyl chloride) coatings, or bitumen based coatings as well as corrosion protecting paints. Combinations and/or the use of several layers of coatings may also be used. The protective layers may be applied by conventional techniques, for example winding, extrusion, coating etc.

The mobile unit may further comprise at least one additional container comprising equipment to provide conditioned air to be used to control the climate in one or more of the other containers. The equipment especially controls the temperature of the air, the humidity of the air or the dust content of the air, preferably for all other containers.

In an alternative embodiment, one or more containers may be provided with its own air conditioning control unit. Especially each containers comprises its own air conditioning equipment. Also intermediate forms, e.g. a central container providing most of the air conditioning requirements and auxiliary air conditioning equipment in one or more containers is possible.

In a further embodiment the mobile unit may comprise a container with equipment to create tension in the elongated pipeline, e.g. caterpillar equipment comprising two tracks situated opposite to each other and touching to the elongated body or to the inner casing. The tension equipment will also control the speed of moving elongated body accurately. The use of tension creating equipment in combination with a winch (for the forward movement of the elongated body) is especially advantageous, as the speed of the elongated tube is controlled very accurately, while the elongated body will not buckle. In the case that movement equipment is present in the mobile unit to push away the elongated body from the mobile unit, at a certain moment in time, especially when the elongated body is relatively long, the forces on the elongated body may result in buckling of the elongated body. Using a winch, either at a place at a distance from the mobile unit or close to or even attached to the mobile unit in combination with a fixed pulley at a distance from the mobile unit, will solve the buckling problem.

In one embodiment the mobile unit comprises at least one additional container comprising monitoring and/or controlling equipment to monitor and/or control the processes carried out in one or more of the other containers, preferably all containers. This "command and control" room is suitably provided with all necessary equipment to view, control, monitor etc. the complete process.

The mobile unit may comprise at least one additional container comprising housing facilities for operators. This container suitably provides food supply, sleeping facilities, recreational facilities etc. for the operators.

The mobile unit suitably comprises one or more standardized sea containers, more particularly ISO-containers, preferably only standardized sea containers (ISO 1496 for shipping containers; further ISO 668 and 1161). The containers are suitably made from steel. In general the container is a closed box or case or chest. Thus, external weather influences are eliminated. Doors will be present to enter the container.

The mobile unit especially comprises containers which are liftable, especially by helicopter or crane, preferably have a weight up till 30 tons, preferably up till 25 tons. Transport is possible by e.g. helicopter, boat and/or truck.

The mobile unit preferably comprises strengthening constructions to connect three or more containers to each other in addition to the direct connections between the containers, preferably a frame connecting the containers to each other. Suitable connecting means are long metal beams, but also lashing equipment, e.g. standard lashing equipment as used on containerships, as strained metal cables or strained metal rods, may be used. Also frames, e.g. rectangular frames made of H-beams may be used, above, beside or below the containers.

Preferably, the mobile unit is situated on a flat, reinforced and optionally piled structure, preferably a reinforced concrete structure or a self-levelling frame.

Suitable the mobile unit produces elongated tubular bodies comprising one metal strip in each layer of the outer casing.

Suitably the mobile unit comprises one or more seals connecting openings in one container with openings in adjacent containers, especially for transport of the elongated tubular body or its precursors from one container to another container, the seals preferably flexible seals, especially bellows. The shape of the seals may be square, rectangular or elliptical, but preferably cylindrical or tubular bellows are used. The minimum diameter size is the same as the diameter of the elongated tubular body, but is preferably the diameter is the tubular body plus 5-50%, especially plus 10 to 20%. The length of the seal is suitably 0.1 to 5 meters, especially 0.2 to 1 meter. The use of seals prevents the ingress of sand, dust, rain etc.

Suitably the mobile unit comprises in the last container an opening provided with a sock or with an air knife, through which opening the elongated tubular body leaves the last container. The mobile unit is preferably operated at a pressure that is above ambient pressure, preferably 5-25 mbar above ambient pressure. This enhanced pressure prevents ingress of dust, sand etc. Preferably the containers comprise grated floors, allowing dust, sand etc. to collect at the bottom of the container. Dedicated entrances may be present in the container to remove the sand, dust etc. from the container bottom.

Suitably the mobile unit comprises between 2 and 25 containers, more suitably between 3 and 20, preferably between 4 and 15, more preferably between 5 and 10.

The mobile unit may also comprise a container in which a number of internal casing elements are stored. In that way, a small trip in the first unit can be overcome by using the stored elements.

Adjacent containers are detachably connected. Detachably connections may comprise nut and bolt systems, but also clamps may be used. Standard lashing equipment may be used as is used to secure the containers on a ship

The invention will be described hereinafter in more detail and by way of example, with reference to the accompanying drawings, in which:
Fig. 1 schematically shows a view of the projected long pipeline.
Fig. 2 schematically shows a view of the projected long pipeline, a part of a produced specific length and a mobile unit producing a specific length.
Fig. 3 schematically shows a view of the projected long pipeline, a part of a produced specific length and a mobile unit producing a specific length.

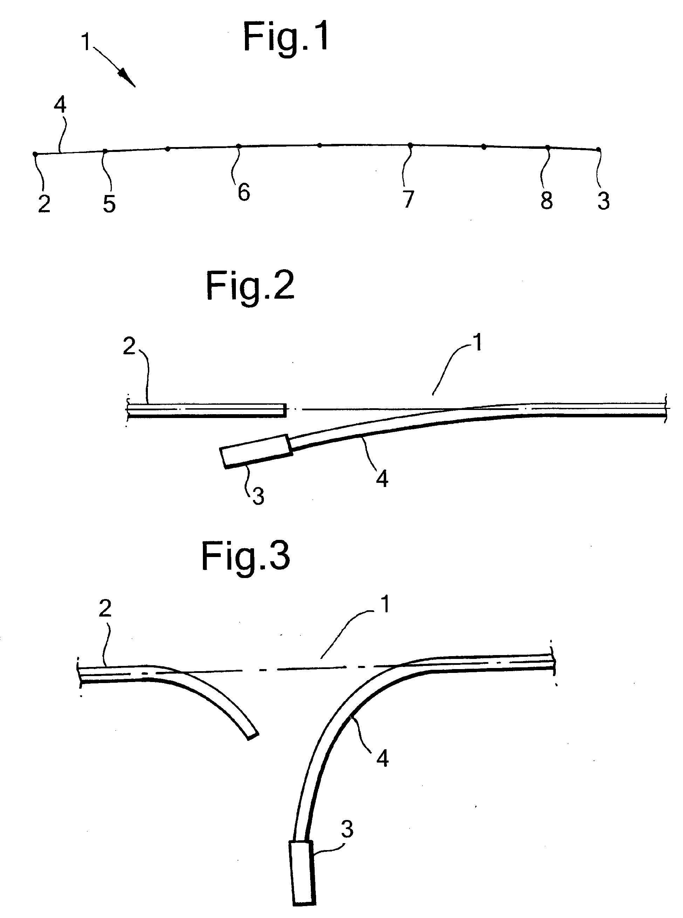

Referring to Figure 1 there is shown a projected long pipeline 1 having a begin 2 and an end 3. The long pipeline is divided into a first specific length 4, followed by seven other specific lengths. The mobile unit is first to be placed on the first position 5 to produce specific length 4 followed by another specific length in the opposite direction. Thereafter the mobile unit is transported the second position 6, the third position 7 and the fourth specific position 8, each time to produce two specific lengths in two opposite directions. In general, the specific lengths may be connected to each other immediately after production or after production of all specific lengths or in any preferred order.

In Figure 2 part of the projected long pipeline 1 is shown. Further, a produced specific length 2 is shown. Mobile unit 3 is producing a further specific length 4 in the opposite direction. Mobile unit 3 had to be turned around before is could start the production of 4. Once the complete specific length 4 has been produced, it is slightly moved until it is opposite the end of 2, and the two are connected.

In Figure 3 mobile unit 3 has produced specific length 2 and is producing from the same position specific length 4 in the opposite direction. Once the complete specific length 4 has been produced, the two specific lengths are moved until they are on the position of the projected long pipeline and the two are connected to each other.

## Claims

1. A method for the construction of a long pipeline (1) using a mobile pipeline producing unit (3), the mobile unit being able to produce specific lengths of the pipeline, each specific length being a fraction of the length of the long pipeline, the method comprising placing the mobile unit (3) at a first position (5) at the stretch of the projected long pipeline, producing a specific length (4) of pipeline in one direction of the projected long pipeline, producing a second specific length (4) of pipeline in the opposite direction, moving the mobile production unit to a second position (6) at the stretch of the projected long pipeline, producing a third specific length (4) of pipeline in a direction of the long pipeline, producing a fourth specific length (4) of pipeline in the opposite direction, optionally moving the mobile production unit to a further position at the stretch of the projected long pipeline, producing a further specific length of pipeline in a direction of the projected long pipeline, producing another further specific length of pipeline in the opposite direction and optionally repeating this process one or more further times, and connecting all produced specific lengths.

2. A method according to claim 1, in which two or more mobile pipeline producing units (3) are used, preferably two or three, the second and, if present, the further mobile units operating in the same way as the first mobile unit (3).

3. A method according to claim 1 or 2, in which there is at least one further mobile pipeline producing unit (3), the further unit being maintained, transported or in standby position.

4. A method according to claim 3, in which there are three mobile pipeline producing units (3), one unit constructing pipeline, one unit being maintained and one unit being transported to a new location.

5. A method according to any of claims 1 to 4, in which the mobile unit (3) comprises a multitude of detachably connected containers, the method preferably comprising assembling the mobile unit at the first position from the containers.

6. A method according to claim 5, in which the method further comprises dissembling the mobile unit (3) into individual containers before moving the unit, moving the dissembled parts of the mobile unit to the second or further position and re-assembling the mobile unit before the further production of one or more specific lengths.

7. A method according to any of claims 1 to 6, in which the first position is one specific length (4) away from one end of the projected long pipeline (1).

8. A method according to claim 7, in which the second position is two specific lengths (4) away from the first position, and optionally any further position is two specific lengths (4) away from a previous position.

9. A method according to any one of claims 1 to 8, in which the mobile (3) unit produces a specific length (4) in one direction of the stretch of the projected pipeline, followed by turning around the mobile unit and producing a specific length (4) of the pipeline in the opposite direction, or in which the mobile unit (3) produces at the same place two specific length of pipeline, one specific length (4) being bend into one direction of the stretch of the projected pipeline, the other specific length (4) being bend into the other direction of the stretch of the projected pipeline, preferably in which the mobile unit has a production direction perpendicular to the stretch of the projected pipeline, preferably the mobile unit (3) situated at a certain distance from the stretch of the projected pipeline, especially a distance between 20 and 200 meters, preferably between 40 and 80 meters.

10. A method according to any one of the preceding claims in which the long pipeline (1) has a length of at least 20 km, preferably at least 50 km, more preferably at least 100 km, even more preferably at least 200 km, the length of the pipeline being up till 500 km, or even up till 1000 km or even more.

11. A method according to any one of the preceding claims in which the specific length (4) is 0.5 to 10 km, preferably 1 to 7.5 km, more preferably 2 to 6 km, each specific length having the same length or having a different length as any other specific length.

12. A method according to any one of the preceding claims in which the specific length (4) is an elongated tubular body comprising an outer casing that comprises at least two layers, each layer consisting of one or more longitudinally preformed, flat elongated metal strips, the preforming of the strips such that the strips have been bent helically in such a way that the consecutive windings of the helix touch or almost touch to each other, each strip in one layer overlapping with other strips in other layers, the layers in the outer casing being bound to each other by an adhesive, which elongated body has been made by a process comprising constructing an elongated inner casing, providing one or more first flat elongated metal strips, plastically preforming the one or more first metal strips in a bending process to obtain one or more helices and applying the one or more preformed first metal strips onto the inner casing to form the first layer of the outer casing, applying a layer of adhesive or curable adhesive precursor, providing one or more second flat, elongated metal strips, plastically preforming the one or more second metal strips in a bending process to obtain one or more helices and applying the preformed one or more second metal strips on the first layer of the outer casing to form the second layer of the outer casing, optionally followed by the further application of one or more additional layers of adhesive or curable adhesive precursor and preformed flat, elongated metal strips, optionally followed by a curing process to cure the adhesive precursor.

13. A method according to any one of the preceding claims in which the mobile unit (3) comprises one container in which equipment is present to helically pre-form at least two elongated metal strips and to apply the preformed strips around the inner casing in two or more layers, each strip forming one layer, and to connect the strips to each other with the adhesive or the curable adhesive precursor, optionally also A method according to any one of the preceding claims connecting the layers to the inner casing with the adhesive or the curable adhesive precursor.

## Patentansprüche

1. Verfahren zum Bau einer langen Pipeline (1) unter Verwendung einer mobilen Herstellungseinheit (3) für Pipelines, wobei die mobile Einheit dazu in der Lage ist, besondere Längen der Pipeline herzustellen, wobei jede besondere Länge ein Teil der Länge der langen Pipeline ist, wobei das Verfahren das Anordnen der mobilen Einheit (3) an einer ersten Position (5) entlang der Trasse der geplanten langen Pipeline, Herstellen einer besonderen Länge (4) der Pipeline in einer Richtung der geplanten langen Pipeline, Herstellen einer zweiten besonderen Länge (4) der Pipeline in entgegengesetzter Richtung, Bewegen der mobilen Herstellungseinheit an eine zweite Position (6) entlang der Trasse der geplanten langen Pipeline, Herstellen einer dritten besonderen Länge (4) der Pipeline in einer Richtung der langen Pipeline, Herstellen einer vierten besonderen Länge (4) der Pipeline in entgegengesetzter Richtung, wahlweise Bewegen der mobilen Herstellungseinheit an eine weitere Position entlang der Trasse der geplanten langen Pipeline, Herstellen einer weiteren besonderen Länge der Pipeline in einer Richtung der geplanten langen Pipeline, Herstellen einer anderen weiteren besonderen Länge der Pipeline in entgegengesetzter Richtung und wahlweise Wiederholen dieses Vorganges ein oder mehrere weitere Male, und Verbinden aller hergestellten besonderen Längen umfaßt.

2. Verfahren nach Anspruch 1, wobei zwei oder mehrere mobile Herstellungseinheiten (3) für Pipelines verwendet werden, vorzugsweise zwei oder drei, wobei die zweite und, falls vorhanden, die weiteren mobilen Einheiten in gleicher Weise wie die erste mobile Einheit (3) betrieben werden.

3. Verfahren nach Anspruch 1 oder 2, wobei zumindest eine weitere Herstellungseinheit (3) für Pipelines vorhanden ist, wobei die weitere Einheit aufrechterhalten und transportiert wird oder sich in Wartestellung befindet.

4. Verfahren nach Anspruch 3, bei welchem drei mobile Herstellungseinheiten (3) für Pipelines vorhanden sind, mit einer die Pipeline herstellenden Einheit, einer Einheit, die aufrechterhalten wird, und einer Einheit, die an einen neuen Ort transportiert wird.

5. Verfahren nach einem der Ansprüche 1 bis 4, wobei die mobile Einheit (3) eine Vielzahl von lösbaren verbundenen Behältern aufweist, wobei das Verfahren vorzugsweise das Zusammenbauen der mobilen Einheit an der ersten Position aus den Behältern umfaßt.

6. Verfahren nach Anspruch 5, wobei das Verfahren ein Zerlegen der mobilen Einheit (3) in einzelne Behälter vor dem Bewegen der Einheit, Bewegen der zerlegten Teile der mobilen Einheit an die zweite oder weitere Position, und Wiederzusammenfügen der mobilen Einheit vor dem weiteren Herstellen von einer oder mehreren besonderen Längen umfaßt.

7. Verfahren nach einem der Ansprüche 1 bis 6, wobei die erste Position eine besondere Länge (4) entfernt von einem Ende der geplanten langen Pipeline (1) ist.

8. Verfahren nach Anspruch 7, wobei die zweite Position zwei besondere Längen (4) entfernt von der ersten Position, und wahlweise jede weitere Position zwei besondere Längen (4) entfernt von einer vorangehenden Position ist.

9. Verfahren nach einem der Ansprüche 1 bis 8, wobei die mobile Einheit (3) eine besondere Länge (4) in einer Richtung der Trasse der geplanten Pipeline herstellt, gefolgt vom Wenden der mobilen Einheit und Herstellen einer besonderen Länge (4) der Pipeline in entgegengesetzter Richtung, oder wobei die mobile Einheit (3) an gleicher Stelle zwei besondere Längen der Pipeline herstellt, wobei eine besondere Länge (4) in einer Richtung der Trasse der geplanten Pipeline gebogen wird, die andere besondere Länge (4) in die andere Richtung der Trasse der Pipeline gebogen wird, wobei vorzugsweise die mobile Einheit eine Herstellungsrichtung senkrecht zu der Trasse der geplanten Pipeline aufweist, wobei vorzugsweise die mobile Einheit (3) in einem bestimmten Abstand von der Trasse der geplanten Pipeline angeordnet ist, insbesondere in einem Abstand zwischen 20 und 200 Metern, vorzugsweise zwischen 40 und 80 Metern.

10. Verfahren nach einem der vorangehenden Ansprüche, wobei die lange Pipeline (1) eine Länge von mindestens 20 km, vorzugsweise zumindest 50 km, weiter bevorzugt zumindest 100 km, und noch mehr bevorzugt zumindest 200 km aufweist, wobei die Länge der Pipeline bis zu 500 km oder sogar bis zu 1000 km oder sogar mehr beträgt.

11. Verfahren nach einem der vorangehenden Ansprüche, bei welchem die besondere Länge (4) 0,5 bis 10 km, vorzugsweise 1 bis 7,5 km, weiter bevorzugt 2 bis 6 km beträgt, wobei jede spezifische Länge die gleiche Länge aufweist, oder eine unterschiedliche Länge zu jeder anderen besonderen Länge aufweist.

12. Verfahren nach einem der vorangehenden Ansprüche, wobei die besondere Länge (4) ein langgestreckter röhrenförmiger Körper ist, der ein äußeres Gehäuse umfaßt, welches zumindest zwei Schichten aufweist, wobei jede Schicht aus einem oder mehreren longitudinal vorgeformten, flachen langgestreckten Metallstreifen besteht, wobei die Vorformung der Streifen derart ist, daß die Streifen in einer Weise spiralförmig gebogen worden sind, daß sich aufeinanderfolgende Windungen der Helix berühren oder nahezu berühren, wobei sich jeder Streifen in einer Schicht mit anderen Streifen der anderen Schichten überlagert, wobei die Schichten in dem äußeren Gehäuse durch ein Haftmittel miteinander verbunden sind, wobei der langgestreckte Körper durch ein Verfahren hergestellt worden ist, das das Herstellen eines langgestreckten inneren Gehäuses umfaßt, Schaffen eines oder mehrerer ersten flachen langgestreckten Metallstreifen, plastisches Vorformen des einen oder der mehreren ersten Metallstreifen in einem Biegeverfahren, um ein oder mehrere Helices zu erhalten, und Aufbringen des einen oder der mehreren vorgeformten ersten Metallstreifen auf das innere Gehäuse, um die erste Schicht des äußeren Gehäuses zu bilden, Aufbringen einer Schicht des Haftmittels oder eines aushärtbaren Haftmittelausgangsstoffes, Schaffen eines oder mehrerer zweiter flacher langgestreckter Metallstreifen, plastisches Vorformen des einen oder der mehreren zweiten Metallstreifen in einem Biegeverfahren, um ein oder mehrere Helices zu erhalten, und Aufbringen der vorgeformten einen oder mehreren zweiten Metallstreifen auf die erste Schicht des äußeren Gehäuses, um die zweite Schicht des äußeren Gehäuses zu bilden, wahlweise gefolgt durch ein weiteres Aufbringen von einer oder mehreren zusätzlichen Schichten des Haftmittels oder des aushärtbaren Haftmittelausgangsstoffes und vorgeformten flachen, langgestreckten Metallstreifen, wahlweise gefolgt durch ein Aushärteverfahren, um den Haftmittelausgangsstoff zu härten.

13. Verfahren nach einem der vorangehenden Ansprüche, wobei die mobile Einheit (3) einen Behälter umfaßt, in welchem das Zubehör enthalten ist, um zumindest zwei langgestreckte Metallstreifen spiralförmig vorzuformen und die vorgeformten Streifen um das innere Gehäuse in zwei oder mehreren Schichten aufzubringen, wobei jeder Streifen eine Schicht ausbildet, und um die Streifen mit dem Haftmittel oder dem aushärtbaren Haftmittelausgangsstoff miteinander zu verbinden, wahlweise auch ein Verfahren nach einem der vorangehenden Ansprüche, bei welchem die Schichten an das innere Gehäuse mit dem Haftmittel oder dem aushärtbaren Haftmittelausgangsstoff verbunden werden.

## Revendications

1. Procédé pour la construction d'un long pipeline (1) employant une unité de production de pipeline mobile (3), l'unité mobile étant capable de produire des longueurs de pipelines spécifiques, chaque longueur spécifique étant une fraction de la longueur du long pipeline, le procédé comprenant la disposition de l'unité mobile (3) à un premier emplacement (5) sur l'étendue du long pipeline projeté, la production d'une longueur spécifique (4) de pipeline dans une direction du long pipeline projeté, la production d'une deuxième longueur spécifique (4) de pipeline dans la direction opposée, le déplacement de l'unité de production mobile vers un deuxième emplacement (6) sur l'étendue du long pipeline projeté, la production d'une troisième longueur spécifique (4) de pipeline dans une direction du long pipeline, la production d'une quatrième longueur spécifique (4) de pipeline dans la direction opposée, le déplacement éventuel de l'unité de production mobile vers un emplacement supplémentaire sur l'étendue du long pipeline projeté, la production d'une longueur spécifique de pipeline supplémentaire dans une direction du long pipeline projeté, la production d'une autre longueur spécifique de pipeline supplémentaire dans la direction opposée et la répétition éventuelle de ce procédé une ou plusieurs fois, et le raccordement de toutes les longueurs spécifiques produites.

2. Procédé selon la revendication 1, dans lequel deux ou plusieurs unités de production de pipeline mobiles (3) sont utilisées, de préférence deux ou trois, où la deuxième et si présentes les unités mobiles supplémentaires fonctionnent de la même façon que la première unité mobile (3).

3. Procédé selon la revendication 1 ou 2, dans lequel il existe au moins une unité de production de pipelines mobile supplémentaire (3), l'unité supplémentaire étant maintenue, transportée ou en position d'attente.

4. Procédé selon la revendication 3, dans lequel il existe trois unités de production de pipelines mobiles (3), une unité construisant des pipelines, une unité étant maintenue et une unité étant transportée vers un nouvel endroit.

5. Procédé selon l'une quelconque des revendications 1 à 4, dans lequel l'unité mobile (3) comprend une multitude de conteneurs reliés de façon détachable, le procédé comprenant de préférence l'assemblage de l'unité mobile au premier emplacement à partir des conteneurs.

6. Procédé selon la revendication 5, dans lequel le procédé comprend en outre le désassemblage de l'unité mobile (3) en conteneurs individuels avant le déplacement de l'unité, le déplacement des pièces désassemblées de l'unité mobile vers le deuxième emplacement ou l'emplacement supplémentaire et le réassemblage de l'unité mobile avant la production d'une ou plusieurs longueurs spécifiques supplémentaires.

7. Procédé selon l'une quelconque des revendications 1 à 6, dans lequel le premier emplacement se trouve à une longueur spécifique (4) d'une extrémité du long pipeline projeté (1).

8. Procédé selon la revendication 7, dans lequel le deuxième emplacement se trouve à deux longueurs spécifiques (4) du premier emplacement, et éventuellement n'importe quel emplacement supplémentaire se trouve à deux longueurs spécifiques d'un emplacement précédent.

9. Procédé selon l'une quelconque des revendications 1 à 8, dans lequel l'unité mobile (3) produit une longueur spécifique (4) dans une direction de l'étendue du pipeline projeté, puis l'unité mobile se retourne et produit une longueur spécifique (4) du pipeline dans la direction opposée, ou dans lequel l'unité mobile (3) produit au même endroit deux longueurs spécifiques de pipeline, une longueur spécifique (4) étant courbée dans une direction de l'étendue du pipeline projeté, l'autre longueur spécifique (4) étant courbée dans l'autre direction de l'étendue du pipeline projeté, dans lequel l'unité mobile suit de préférence une direction de production perpendiculaire à l'étendue du pipeline projeté, l'unité mobile (3) étant de préférence située à une certaine distance de l'étendue du pipeline projeté, en particulier à une distance de 20 à 200 mètres, de préférence de 40 à 80 mètres.

10. Procédé selon l'une quelconque des revendications précédentes, dans lequel le long pipeline (1) présente une longueur d'au moins 20 km, de préférence d'au moins 50 km et mieux d'au moins 100 km et encore mieux d'au moins 200 km, la longueur du pipeline allant jusqu'à 500 km, ou même jusqu'à 1000 km ou même plus.

11. Procédé selon l'une quelconque des revendications précédentes, dans lequel la longueur spécifique (4) est de 0,5 à 10 km, de préférence de 1 à 7,5 km et mieux, de 2 à 6 km, chaque longueur spécifique présentant la même longueur ou présentant une longueur différente de toute autre longueur spécifique.

12. Procédé selon l'une quelconque des revendications précédentes, dans lequel la longueur spécifique (4) est un corps tubulaire allongé comprenant une enveloppe extérieure comportant au moins deux couches, chacune des couches consistant en une ou plusieurs bandes métalliques allongées plates, préformées longitudinalement, les bandes étant préformées de manière à ce que les spires successives de l'hélice se touchent ou se touchent quasiment entre elles, chaque bande dans une couche chevauchant les autres bandes dans d'autres couches, les couches dans l'enveloppe extérieure étant collées entre elles par un agent adhésif, ledit corps allongé étant fabriqué à l'aide d'un procédé comprenant la construction d'une enveloppe intérieure allongée, la préparation d'une ou plusieurs premières bandes métalliques allongées plates, le préformage plastique des une ou plusieurs premières bandes métalliques par un procédé de fléchissement pour obtenir une ou plusieurs hélices, et l'application des une ou plusieurs premières bandes métalliques sur l'enveloppe intérieure pour former la première couche de l'enveloppe extérieure, l'application d'une couche d'agent adhésif ou de précurseur d'adhésif durcissable, la préparation d'une ou plusieurs deuxièmes bandes métalliques allongées plates, le préformage plastique des une ou plusieurs deuxièmes bandes métalliques par un procédé de fléchissement pour obtenir une ou plusieurs hélices, et l'application des une ou plusieurs bandes métalliques préformées sur la première couche de l'enveloppe extérieur, pour former la deuxième couche de l'enveloppe extérieure, éventuellement suivie d'une application supplémentaire d'une ou de plusieurs couches supplémentaires d'agent adhésif ou de précurseur d'adhésif durcissable et de bandes métalliques allongées plates, éventuellement suivie d'un procédé de durcissement pour faire durcir le précurseur d'adhésif.

13. Procédé selon l'une quelconque des revendications précédentes, dans lequel l'unité mobile (3) comprend un conteneur dans lequel se trouve un dispositif destiné à préformer au moins deux bandes métalliques allongées et pour appliquer les bandes préformées autour de l'enveloppe intérieure, en deux ou plusieurs couches, chaque bande formant une couche, et pour relier les bandes les unes aux autres avec l'agent adhésif ou le précurseur d'adhésif durcissable, éventuellement également un procédé selon l'une quelconque des revendications précédentes reliant les couches à l'enveloppe intérieure avec l'agent adhésif ou le précurseur d'adhésif durcissable.
